## Europäisches Patentamt
## European Patent Office
## Office européen des brevets

Publication number: **0 276 089**
**A1**

# EUROPEAN PATENT APPLICATION

Application number: **88300297.4**

Date of filing: **14.01.88**

Int. Cl.⁴: **A 47 J 37/08**

Priority: **15.01.87 GB 8700877**

Date of publication of application:
**27.07.88 Bulletin 88/30**

Designated Contracting States:
**AT BE CH DE ES FR GB GR IT LI LU NL SE**

Applicant: **DREAMLAND ELECTRICAL APPLIANCES P.L.C.**
**Shore Road**
**Hythe Southampton Hampshire, SO4 6YE (GB)**

Inventor: **Cole, Graham Malcolm**
**82 Southampton Road**
**Lymington Hampshire SO4 9GZ (GB)**

**Burnett, James Walter**
**120 Fromond Road Weeke**
**Winchester Hampshire (GB)**

Representative: **Cotter, Ivan John et al**
**D. YOUNG & CO. 10 Staple Inn**
**London WC1V 7RD (GB)**

Electric toasters.

An electric toaster comprises a light detector (20) arranged to receive light reflected from an item (16) toasted and to develop a signal representative of the amount of reflected light, and means (32, 33, 34) responsive to the detector signal indicating that the amount of reflected light has dropped to a predetermined proportion of an initial value thereof to produce an output signal indicative of such.

FIG.2

## Description

<p style="text-align:center">ELECTRIC TOASTERS</p>

This invention relates to electric toasters, that is devices for toasting slices of bread or other toastable items of food.

Conventional electric toasters operate by heating a slice of bread or other item of food by means of one or more radiant (red hot) heating elements located close to (but spaced from) the bread or other item. Usually, the item to be toasted is positioned, with the aid of one or more grids or grilles, midway between two radiant heating elements. The degree of browning (toasting) of the item to be toasted depends upon the period of time during which the item is heated by the heating element(s). The period of time is manually adjustable to enable adjustment of the degree of browning. As is well known, the control of the degree of browning produced in this way is rather crude. Thus, the degree of browning produced for a given period of time will vary in dependence on various factors, such as:

(i) The type of bread or other item to be toasted (e.g. white, brown or granary bread).

(ii) The texture of the surface or other item to be toasted, i.e. smooth, porous or lumpy.

(iii) The moisture content of the bread or other item to be toasted, which will differ as between the cases in which it is stale or fresh, pre-sliced or freshly sliced, and frozen or at room temperature.

(iv) The thickness of the bread or other item to be toasted, which controls the spacing between the heating elements and the surface(s) to be toasted.

(v) The ambient temperature, that is the temperature within the toaster at the start of the toasting period.

Thus user of the toaster may, by trial and error, adjust the toasting time in an attempt to produce an optimum setting at least for a particular supply of items to be toasted (for example slices of bread from a particular pre-sliced loaf) on a particular occasion. This enables a crude form of compensation for factors (i) to (iii) above.

With regard to factor (iv) above, some toasters employ sophisticated self-centring mechanisms which hold a slice of bread centrally between two heating elements. This should ensure approximately even browning of the two toasted surfaces, though it will be appreciated that, for a given period of time, the degree of browning of the two surfaces will increase as the thickness of the bread is increased (and the spacing from the elements is therefore reduced).

Factor (v) above, which results in an inability to produce a batch of toast of consistent quality, using a supply of identical slices of bread, without constant adjustment of the toasting period during toasting of the batch, is a frequent source of complaint from toaster users. To compensate at least partly for this disadvantage, conventional toasters may be fitted with an ambient temperature compensation device which reduces the toasting period as the average temperature within the toaster increases with repeated use.

In summary, conventional toasters aim to enable the user to produce toast of a certain colour by attempting to provide a crude correlation between the toasting time, sometimes with ambient temperature compensation, and the degree of browning produced. It is left to the user to acertain, by trial and error, which setting or settings of the toasting period is needed for a particular type of bread (or other item) to be toasted.

According to the first aspect of the present invention there is provided an electric toaster comprising a light detector arranged to receive light reflected from an item being toasted and to develop a signal representative of the amount of reflected light, and means responsive to the detector signal indicating that the amount of reflected light has dropped to a value indicating that the toast has achieved a desired degree of browning to produce an outpout signal indicative of such.

Such a toaster overcomes or at least alleviates at least some of the above-mentioned problems associated with conventional toasters in that, instead of the user having to establish, by trial and error, an appropriate toasting period or time, the toaster detects directly whether the reflectance of the toast (which decreases as the degree of browning of the toast increases) has dropped to a value indicating that a desired degree of browning has been achieved and is responsive thereto to produce the output signal which, usually, will be used to terminate toasting. That is, such a toaster will circumvent the difficulties posed by at least some of the factors set forth above by determining when toasting is complete by observing the toast in a similar manner to that which could be accomplished by the human eye if the user were manually toasting an item in front of a radiant fire.

Effectively, the toaster decides when the reflectance has dropped to a predetermined percentage of the reflectance prior to toasting having commenced. This can, in general, cause difficulty as regards bread of different colours, since the amount of light reflected from brown bread when it has attained a desired degree of browning is different from the amount of light reflected from white bread when it has attained the same desired degree of browning. This difficulty could be overcome at least to some extent by providing means for manually varying the detector signal value at which the output signal is developed between respective values for white and brown bread. However, a more effective solution, which provides a toaster which effectively adapts itself to bread of any initial reflectance, is provided by a second aspect of the invention.

According to the second aspect of the invention there is provided an electric toaster comprising a light detector arranged to receive light reflected from an item being toasted and to develop a signal representative of the amount of reflected light, and means responsive to the detector signal indicating that the amount of reflected light has dropped to a predetermined proportion of an initial value thereof to produce an output signal indicative of such.

It has been ascertained that the proportional drop in reflectance, from an initial value, for degrees of browning falling within a range of values of degrees of browning usually desired in toast, does not differ markedly as between bread of different colours. That is to say, if toasting is stopped after the reflectances of slices of both brown and white bread have dropped to, say, 50% of their initial values, both slices will in fact in have been toasted to a similar extent. Further, as explained below, selection of the wavelength of the light enables minimisation of the difference between the degrees of the browning achieved for a given signal reduction proportion in the cases of brown and white bread, respectively.

Preferably, to enable the user to select the degree of browning, the predetermined proportion is manually adjustable.

The light detector can, in principle, be responsive to ambient light. However, since ambient light levels can vary, and since a sufficient level of ambient light may not be available, it is not usually satisfactory to rely on ambient light. To this end, therefore, the toaster preferably comprises a light source for illuminating the item being toasted. In some cases, the light source may comprise a radiant heating element for effecting the toasting. Usually, however, the light source will be separate from the radiant heating element.

Experiments were carried out in which the spectral reflectance of white and brown bread at all degrees of browning or browness from lightly toasted to burnt was measured. The reflectance was measured for monochromatic light across the entire visible spectrum, and just outside of the visible red spectrum (i.e. into the near infra-red band) for both hot and cold slices of bread. It was found that results that were to some degree satisfactory could be obtained for monochromatic light over the entire visible spectrum and in the near infra-red range, in that, for all types of bread, there was in all these cases a reasonable degree of correlation between the characteristics relating the degree of browning and the reflectance. (It is believed that the same will hold true for white light). However, better results in terms of correlation between the degree of browness/reflectance characteristics for different types of bread were found for light (monochromatic or narrow waveband) within the range of 500nm to 700nm, that is for light of wavelengths extending from the green wavelength range (just above its transition from the blue) wavelength range, through the yellow and orange wavelength ranges and into the visible red range. Particularly good results were obtained for light (monochromatic or narrow waveband) around the 600nm wavelength, that is roughly at the transition between the yellow spectrum or wavelength range (577 to 597nm) and the orange spectrum (597 to 622nm). For light at this optimum wavelength of around 600nm (yellow/orange), it was found that one can accurately select the degree of toasting or browning required by allowing the bread to toast until the magnitude of the reflected signal had fallen to a predetermined percentage or proportion of the original signal. This fact was found to hold true regardless of whether the bread was cold or hot or whether it was brown or white. Typically, to produce light golden toast from white bread, it was necessary to wait until the reflected signal had fallen to half of its original value. If, on the other hand, well-done (dark brown) toast was required, it was necessary to wait until the reflected signal fell to one quarter of its original value. Most importantly, if brown bread was used, while the initial reflected signal was of lower value than in the case of white bread, the relationship between the degree of toasting and the percentage reduction in signal was found to be substantially the same as that for white bread.

It was found preferable, in order to remove undesired influences such as 50Hz ambient light components from artificial light, light of other than a desired wavelength range reflected from the toast, and dc light from ambient light and from radiant heating elements in the toaster, to chop or modulate the light source at a frequency substantially above 50Hz and to filter the received signal by means of a band pass or high pass filter or an optical filter so as exclude at least some of these undesired components. To this end, it was found desirable to use a light emitting diode (LED) as the light source, since LEDs readily can be switched on and off at a frequency well above 50Hz. A green LED (providing light at a wavelength 565nm) and a red LED (producing light at a wavelength at 635nm) were both found to be satisfactory. However, a yellow LED providing light at a wavelength of around 583nm, which is near the above-mentioned optimum wavelength of around 600nm, was found to give particularly good results.

The invention will now be further described, by way of illustrative and non-limiting example, with reference to the accompanying drawing, in which:-

Figure 1 is a partial schematic view of an electric toaster embodying the invention; and

Figure 2 is a schematic electrical circuit diagram of the toaster.

The design of the illustrated toaster is based upon a conventional electric toaster comprising well designed, uniform radiant heating elements 10, 12 and a self-centring grid assembly comprising grids or grilles 14 of thin cross-section operative to position a slice of bread 16 to be toasted centrally between the heating elements 10, 12, regardless of variation in thickness of the slice over a predetermined range.

A light source 18 and a light detector 20 are positioned side by side in a metal tube 22 spaced from one of the surfaces of the slice of bread 16 by a distance d which was equal to 3cm. The light source 18 is a yellow LED producing light having a wavelength of around 583nm.

The light source 18 is energised by a pulse generator 24 producing a square wave having a frequency of 5kHz and a peak amplitude of 20mA. The resultant 5kHz modulated light emitted by the light source 18 is reflected from the slice of bread 16 and detected by the light detector 20. The detector 20 can be a low cost photo-transistor, though other light detectors such as photo-diodes and light sensitive resistors can be employed.

The light detector 20 produces a signal whose magnitude is proportional to the amount of reflected light received by the detector 20. This signal is amplified by an amplifier 26. The amplified output signal from the amplifier 26 is passed to a filter 28. The filter 28 is a high pass filter or band pass filter and is operative to remove any signal components substantially below 5kHz. For exmaple, the lower cut off point of the filter 28 may be 4kHz.

The filtered signal is then passed to a rectifier 30 which develops a dc signal whose magnitude is proportional to the amount of light from the light source 18 which is reflected by the slice of bread 16. The dc signal is passed to an input of a sample and hold circuit 32 and to a first inpout of a comparator 34. An output of the sample and hold circuit 32 is connected via a divider 33 to a second input of the comparator 34. The divider 33 divides (reduces) the dc input signal applied thereto by the sample and hold circuit 32 by an adjustable ratio so as to provide a dc output voltage ranging from, for example, 20% to 50% of the dc input signal. To enable adjustment, that is selection of the ratio in the range of 20% to 50%, the divider 33 may comprise a potentiometer. The ratio is manually adjustable by the user, for example by means of a control knob (not shown) mounted on the exterior of a casing of the toaster. As will be appreciated, the selected ratio determines the degree of toasting, 50% corresponding to lightly toasted bread and 20% to very well toasted bread.

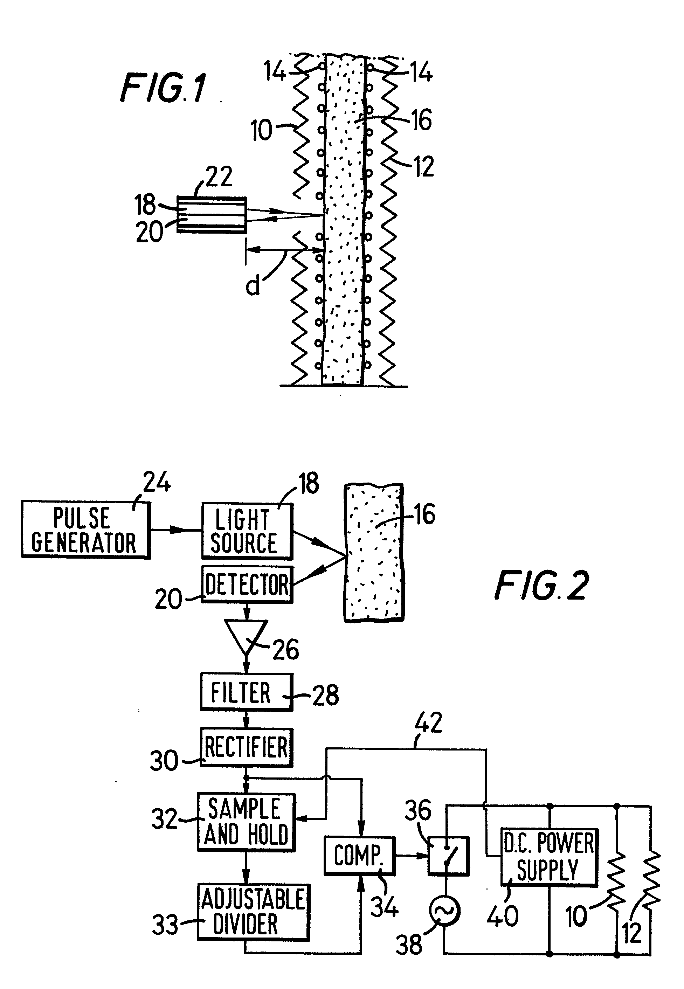

An output of the comparator 34 is connected to an on/off switch 36 which is operative to control the passage of current from an ac power source 38 to a dc power supply 40 and to the heating elements 10, 12. The dc power supply 40 provides a dc power supply for operating the circuitry illustrated in Figure 2. Also, the dc power supply 40 is connected to the sample and hold circuit 32 by a line 42.

A toaster operates in the following manner. A slice of bread 16 is positioned therein, as shown in Figure 1, in a manner known per se in the art. The on-off switch 36 is at that time turned on, possibly (depending upon the design of the toaster) by the operation of a lever used to lower the slice of bread 16 to the position shown in Figure 1 and to position the slice of bread 16 centrally between the heating elements 10, 12, by means of the grids 14, as shown in Figure 1. Closure of the on/off switch 36 causes heating current to flow through the heating elements 10, 12 and also causes the dc power supply 40 to produce a dc output to power the circuitry shown in Figure 2. By virtue of a signal supplied on the line 42 from the power supply 40 when it is turned on, the sample and hold circuit 32 is caused to sample and hold the initial value of the dc signal produced at the output at the rectifier 30. (The sample and hold circuit 32 may include a delay circuit operative to cause sampling to take place a few seconds (e.g. 5 seconds) after toasting has been commenced by energisation of the heating elements 10, 12, after which delay initial drying of the bread will have taken place, rather than immediately toasting has commenced.) The initial signal value on the output of the sample and hold circuit 32 is reduced in value by the adjustable divider 33 in accordance with a proportion or percentage chosen by the user in accordance with the required degree of toasting. The predetermined proportion may, for example, vary between 20 and 50% of the sampled and held value.

As the slice of bread 16 is toasted, the reflectance thereof decreases. Accordingly, the value of the dc output signal from the rectifier 30, as applied to the first input of the comparator 34, will gradually decrease. When it decreases to a value below the preset or predetermined value of the initial (sampled and held) signal as applied to the second input of the comparator 34 via the adjustable divider 34, the comparator produces an output signal which causes the on/off switch 36 to become open whereby toasting is stopped. The signal from the comparator 34 may also, if desired, be used to operate a solenoid to cause ejection of the toasted slice of bread 16 from the toaster.

It will be appreciated that, each time the toaster is used, toasting is stopped when the reflectance of the particular slice of bread inserted into the toaster on that occasion of use drops to a selected proportion or percentage of the initial value as sampled and held by the circuit 32.

The invention can, of course, be performed in other ways than that described above by way of example.

For instance, it should be noted that the above-described toaster monitors the reflectance of one side only of the toast and terminates toasting of both sides of the slice of bread 16 when it determines that the monitored side has been toasted to the desired degree. This should, of course, generally produce satisfactory results, since the toaster employs, as explained, a self-centring mechanism for ensuring that the slice of bread is positioned mid-way between the heating elements 10, 12 so that, provided the heating elements are the same, both sides should be toasted to the same extent. It is, however, within the scope of the invention for a respective detecting arrangement as described to be provided for each side of the slice of bread 16 and for each of these to control the appropriate respective one of the heating elements 10, 12. Such an arrangement should ensure that both sides of the slice of bread 16 are toasted to the same degree, even if they are spaced by different amounts from their respective heating elements 10, 12. Alternatively, it would be possible to provide a respective detecting arrangement as described for each side of the slice of bread 16 and to average the outputs therefrom and to use the averaged signal to terminate toasting.

As mentioned above, although the use of a yellow LED as the light source 18 is preferred, other LEDs and, indeed, other forms of light source can be employed. Also as mentioned above, it is is principle possible to use a single energy source as both the light source and as a source of radiant energy to effect the toasting. For example, it may be possible to use a halogen cooker lamp to achieve both these functions. It would be necessary in this case to ensure that the detector could receive only light reflected from the bread and could not receive light directly from the source.

Although the circuit described with reference to Figure 2 comprises analogue components, a digital circuit, employing for example a semi-custom integrated circuit or microprocessor, could be used instead.

In some circumstances, the filter 28 could be replaced or enhanced by providing an optical filter, permitting the passage only of light of a desired wavelength, in the path of light reflected from the toast towards the detector 20.

**Claims**

1. An electric toaster comprising a light detector arranged to receive light reflected from an item being toasted and to develop a signal representative of the amount of reflected light, and means responsive to the detector signal indicating that the amount of reflected light has dropped to a value indicating that the toast has achieved a desired degree of browning to produce an output signal indicative of such.

2. An electric toaster comprising a light detector arranged to receive light reflected from an item being toasted and to develop a signal representative of the amount of reflected light, and means responsive to the detector signal indicating that the amount of reflected light has dropped to a predetermined proportion of an initial value thereof to produce an output signal indicative of such.

3. An electric toaster according to claim 2, wherein the predetermined proportion is manually adjustable.

4. An electric toaster according to claim 3, wherein the predetermined proportion is adjustable over a range substantially equal to one quarter to one half.

5. An electric toaster according to any one of claims 2 to 4, including means for ascertaining said initial value of the amount of reflected light at the end of a predetermined delay period that starts on commencement of toasting.

6. An electric toaster according to any one of the preceding claims, which comprises a light source for illuminating the item being toasted, the light detector being positioned to receive light from the light source which has been reflected by an item being toasted.

7. An electric toaster according to claim 6, wherein the light source comprises a radiant heating element for effecting toasting.

8. An electric toaster according to claim 6, wherein the light source is such as to emit light (monochromatic or narrow waveband) substantially within the wavelength range of 500nm to 700nm.

9. An electric toaster according to claim 8, wherein the light source is such as to emit light (monochromatic or narrow waveband) around the 600nm wavelength.

10. An electric toaster according to claim 6, wherein the light source is a yellow light emitting diode.

11. An electric toaster according to claim 6, wherein the light source is a green light emitting diode.

12. An electric toaster according to claim 6, wherein the light source is a red light emitting diode.

13. An electric toaster according to any one of claims 6 to 12, including means for chopping or modulating the light source at a frequency substantially above the mains or network supply frequency and an optical filter for filtering the light reflected from the item being toasted or an electrical filter for filtering the signal representative of the amount of reflected light.

14. An electric toaster according to any one of the preceding claims, including means responsive to said output signal to terminate toasting.

0276089

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 616 546 (FRAUNHOFER-GESELLSCHAFT) * Whole document * | 1,2,3,5,6,13,14 | A 47 J 37/08 |
| X | DE-A-2 844 650 (SCHICKEDANZ) * Pages 25,26 * | 1,2,3,5,6,14 | |
| X | US-A-4 245 148 (GISSKE et al.) * Whole document * | 1,6,7,14 | |
| X | US-A-2 631 523 (OLVING) * Whole document * | 1,6,7,14 | |
| X | EP-A-0 033 642 (FOURNY) * Whole document * | 1,6,14 | |

TECHNICAL FIELDS SEARCHED (Int. Cl.4)

A 47 J

The present search report has been drawn up for all claims

| Place of search | Date of completion of the search | Examiner |
|---|---|---|
| THE HAGUE | 12-04-1988 | SCHARTZ J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)